# EUROPEAN PATENT APPLICATION

(11) **EP 4 603 834 A2**
(43) Date of publication of application: **20.08.2025**
(21) Application number: 25184970.9
(22) Date of filing: 30.06.2022
(51) Int. Cl.: G01N 30/86

(54) **AUTOMATED PEAK AND BASELINE GENERATION FOR CHROMATOGRAM DATA**

(30) Priority: 30.06.2021 US 202117364796
(62) Divisional of application: 22182159.8
(71) Applicant: FEI Company, Hillsboro, OR 97124-5793 (US)
(72) Inventor: LACOUT, Fabrice, Hillsboro, 97124-5793 (US); SAUTER, Peter, Hillsboro, 97124-5793 (US)
(74) Representative: Boult Wade Tennant LLP

(57) **Abstract**

Disclosed herein are chromatography instrument support systems, as well as related apparatuses, methods, computing devices, and computer-readable media. For example, in some embodiments, a chromatography instrument support apparatus may include: first logic to generate one or more peak locations for a chromatogram data set and to generate one or more baselines for the chromatogram data set, wherein an individual peak has an associated baseline, and wherein the first logic includes a machine-learning computational model that outputs estimated peak locations and estimated baselines; second logic to cause the display of the one or more peak locations and the one or more baselines concurrently with the display of the chromatogram data set; and third logic to, for individual peaks, generate an associated integrated value representing an area above the associated baseline and under a portion of the chromatogram data set corresponding to the individual peak.

## Description

### Background

Chromatography is a technique for the separation of constituents of a sample mixture that utilizes the differing properties of the constituents as they interact with other materials. Types of chromatography include gas chromatography and liquid chromatography, among others.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1 is a block diagram of an example chromatography instrument support module for automated peak and baseline generation, in accordance with various embodiments.
FIG. 2 is a flow diagram of an example method of automated peak and baseline generation, in accordance with various embodiments.
FIG. 3 is a flow diagram of an example method of generating and selecting a machine-learning computational model for peak and baseline generation, in accordance with various embodiments.
FIG. 4 is a flow diagram of an example method of updating a machine-learning computational model for peak and baseline generation based on user adjustments, in accordance with various embodiments.
FIG. 5 depicts an example graphical representation of chromatogram data along with peak locations and baselines that may be generated by the chromatography instrument support modules disclosed herein, in accordance with various embodiments.
FIG. 6 depicts an example graphical representation of chromatogram data along with peak locations and baselines that may be generated by the chromatography instrument support modules disclosed herein, after receipt of a user adjustment, in accordance with various embodiments.
FIG. 7 is an example of a graphical user interface that may be used in the performance of some or all of the support methods disclosed herein, in accordance with various embodiments.
FIG. 8 is a block diagram of an example computing device that may perform some or all of the chromatography instrument support methods disclosed herein, in accordance with various embodiments.
FIG. 9 is a block diagram of an example chromatography instrument support system in which some or all of the chromatography instrument support methods disclosed herein may be performed, in accordance with various embodiments.

### Detailed Description

Disclosed herein are chromatography instrument support systems, as well as related apparatuses, methods, computing devices, and computer-readable media. For example, in some embodiments, a chromatography instrument support apparatus may include: first logic to generate one or more peak locations for a chromatogram data set and to generate one or more baselines for the chromatogram data set, wherein an individual peak has an associated baseline, and wherein the first logic includes a machine-learning computational model that outputs estimated peak locations and estimated baselines; second logic to cause the display of the one or more peak locations and the one or more baselines concurrently with the display of the chromatogram data set; and third logic to, for individual peaks, generate an associated integrated value representing an area above the associated baseline and under a portion of the chromatogram data set corresponding to the individual peak.

The chromatography instrument support embodiments disclosed herein may achieve improved performance relative to conventional approaches. As discussed in further detail below, conventional chromatography requires a significant amount of effort on the part of users to identify the peak locations, droplines, and/or baselines that are used to extract constituent information from a chromatogram of a sample mixture. This required effort can be a significant bottleneck in the throughput of a chromatography process, constraining the volume, types, and speed of chromatographic analysis that can be performed.

The chromatography instrument support embodiments disclosed herein may include a machine-learning computational model that outputs estimated peak locations and estimated baselines, and that is trained on data that has been provided by an individual or institution and reflects that individual's or institution's preferences for peak and baseline identification. The machine-learning computational model may be trained to recognize the "subjective," difficult-to-quantify preferences that govern an individual's or institution's method of defining peaks and baselines, and may significantly reduce the amount of human intervention required to process and characterize a chromatogram, significantly decreasing errors and significantly increasing throughput. The embodiments disclosed herein thus provide substantial improvements to chromatography technology (e.g., improvements in the computer technology supporting chromatography instruments, among other improvements).

In the following detailed description, reference is made to the accompanying drawings that form a part hereof wherein like numerals designate like parts throughout, and in which is shown, by way of illustration, embodiments that may be practiced. It is to be understood that other embodiments may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may not be performed in the order of presentation. Operations described may be performed in a different order from the described embodiment. Various additional operations may be performed, and/or described operations may be omitted in additional embodiments.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments. Furthermore, the terms "comprising," "including," "having," and the like, as used with respect to embodiments of the present disclosure, are synonymous. When used to describe a range of dimensions, the phrase "between X and Y" represents a range that includes X and Y. As used herein, an "apparatus" may refer to any individual device, collection of devices, part of a device, or collections of parts of devices. The drawings are not necessarily to scale.

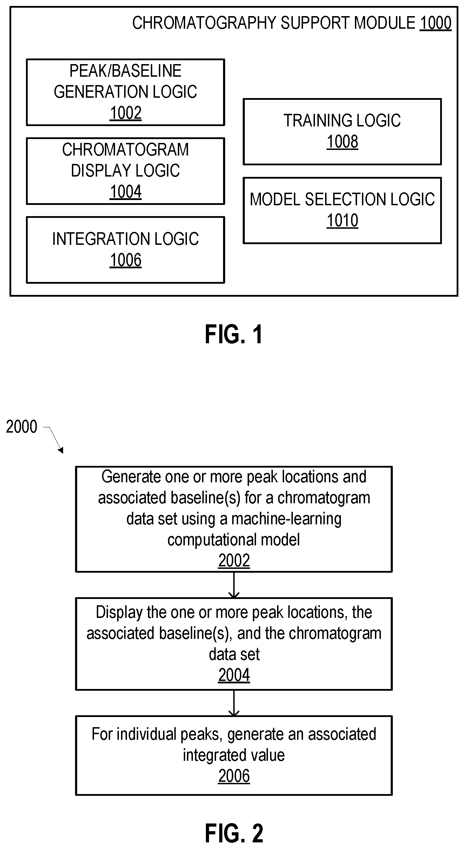

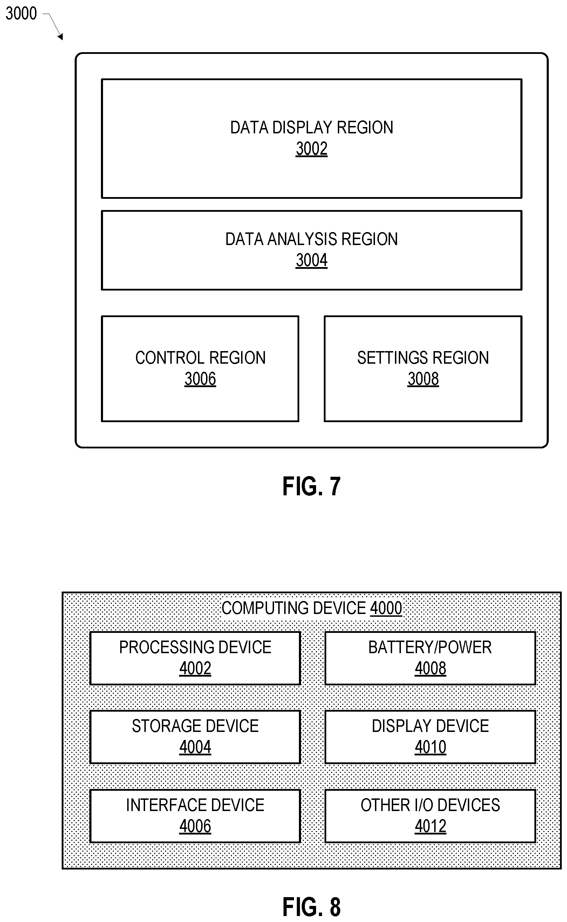

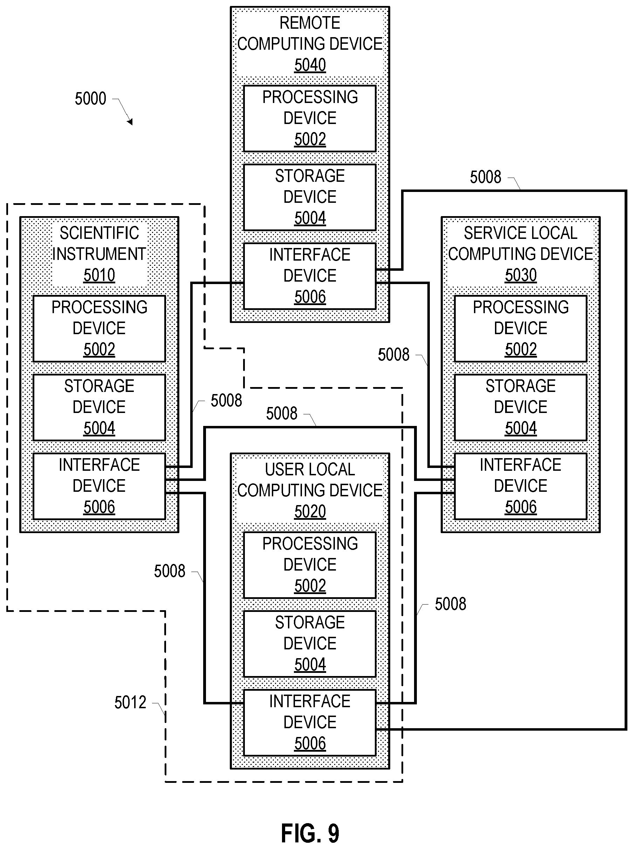

FIG. 1 is a block diagram of a chromatography instrument support module 1000 for automated peak and baseline generation, in accordance with various embodiments. The chromatography instrument support module 1000 may be implemented by circuitry (e.g., including electrical and/or optical components), such as a programmed computing device. The logic of the chromatography instrument support module 1000 may be included in a single computing device, or may be distributed across multiple computing devices that are in communication with each other as appropriate. Examples of computing devices that may, singly or in combination, implement the chromatography instrument support module 1000 are discussed herein with reference to the computing device 4000 of FIG. 8, and examples of systems of interconnected computing devices, in which the chromatography instrument support module 1000 may be implemented across one or more of the computing devices, is discussed herein with reference to the chromatography instrument support system 5000 of FIG. 9.

The chromatography instrument support module 1000 may include peak/baseline generation logic 1002, chromatogram display logic 1004, integration logic 1006, training logic 1008, and model selection logic 1010. As used herein, the term "logic" may include an apparatus that is to perform a set of operations associated with the logic. For example, any of the logic elements included in the support module 1000 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform one or more functions associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

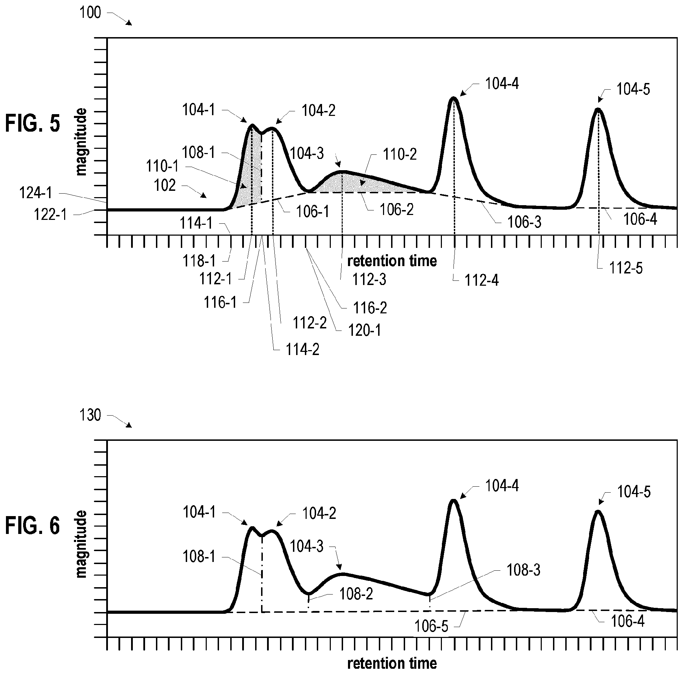

The peak/baseline generation logic 1002 may be configured to generate one or more peak locations 112 (examples of which are illustrated in FIG. 5) for a chromatogram data set 102, as well as to generate one or more baselines 106 (examples of which are illustrated in FIG. 5) for the chromatogram data set 102. The chromatogram data set 102 may be data generated by a chromatography instrument, such as any of the chromatography instruments discussed herein. For example, the chromatogram data set 102 may include capillary electrophoresis data, cation exchange data, hydrophobic interaction data, reversed-phase data, or size-exclusion data, among others.

In the output of the peak/baseline generation logic 1002, individual peaks 104 have an associated baseline 106, and multiple peaks 104 may share a single baseline 106; such multiple peaks 104 may be referred to as a group of peaks 104. For example, FIG. 5 depicts an example graphical representation 100 of a chromatogram data set 102, represented as magnitude as a function of retention time, along with peak locations 112 and baselines 106 that may be generated by the peak/baseline generation logic 1002. In the graphical representation 100 of FIG. 5, five peaks 104 (labeled 104-1, 104-2, 104-3, 104-4, and 104-5) and four baselines 106 (labeled 106-1, 106-2, 106-3, and 106-4) have been generated by the peak/baseline generation logic 1002. The baseline 106-1 is associated with the peaks 104-1 and 104-2 (with the peaks 104-1 and 104-2 thereby forming a group of peaks associated with the baseline 106-1), the baseline 106-2 is associated with the peak 104-3, the baseline 106-3 is associated with the peak 104-4, and the baseline 106-4 is associated with the peak 104-5. A peak location 112 may be the value of the retention time at the apex of the peak 104, and the peak location 112 of a peak 104 may also be referred to as the retention time of the peak 104. For example, FIG. 5 depicts the peak locations 112-1, 112-2, 112-3, 112-4, and 112-5 of the peaks 104-1, 104-2, 104-3, 104-4, and 104-5, respectively.

Individual baselines 106 may be associated with (e.g., defined by) a baseline start location 118 (along the retention time axis), a baseline start signal 122 (along the magnitude axis), a baseline end location 120 (along the retention time axis), and a baseline end signal 124 (along the magnitude axis). For example, in FIG. 5, the baseline 106-1 has a baseline start location 118-1, a baseline start signal 122-1, a baseline end location 120-1, and a baseline end signal 124-1. As discussed further below, in some embodiments, the machine-learning computational model included in the peak/baseline generation logic 1002 may output estimated values of the baseline start signal 122 and the baseline end signal 124 associated with estimated baselines 106, while in other embodiments, the baseline start signal 122 and the baseline end signal 124 associated with an estimated baseline 106 may be determined by identifying the value of the chromatogram data set 102 at the baseline start location 118 and the baseline end location 120, respectively.

Individual peaks 104 may also be associated with a peak start location 114 (along the retention time axis) and a peak end location 116 (along the retention time axis). The peak start location 114 associated with a peak 104 may be defined by the baseline start location 118 of the baseline 106 associated with the peak 104, or by the location (along the retention time axis) of a dropline 108 from the chromatogram data set 102 to the baseline 106. Similarly, the peak end location 116 associated with a peak 104 may be defined by the baseline end location 120 of the baseline 106 associated with the peak 104, or by the location (along the retention time axis) of a dropline 108 from the chromatogram data set 102 to the baseline 106. A peak start location 114 and/or a peak end location 116 associated with the peak 104 may be defined by a dropline 108 when the peak 104 is part of a group of peaks associated with a single baseline 106. When a peak 104 has the "earliest" peak location 112 in a group of peaks 104, the peak start location 114 of that peak 104 may be defined by the baseline start location 118 of the associated baseline 106, and the peak end location 116 may be defined by a dropline 108. For example, in FIG. 5, the peak 104-1 has a peak start location 114-1 defined by the baseline start location 118-1, and a peak end location 116-1 defined by the dropline 108-1. When a peak 104 has the "latest" peak location 112 in a group of peaks 104, the peak start location 114 of that peak 104 may be defined by a dropline 108, and the peak end location 116 of that peak 104 may be defined by the baseline end location 120. For example, in FIG. 5, the peak 104-2 has a peak start location 114-2 defined by the dropline 108-1, and a peak end location 116-2 defined by the baseline end location 120-1. If a group of peaks 104 includes three or more peaks 104, the "middle" peaks 104 may have their peak start locations 114 and their peak end locations 116 defined by droplines 108 (not shown in FIG. 5). Thus, for a particular peak 104, the peak start location 114, the peak end location 116, both the peak start location 114 and the peak end location 116, or neither the peak start location 114 nor the peak end location 116 may be defined by an intersection between the chromatogram data set 102 and the baseline 106 associated with the peak 104. Similarly, for a particular peak 104, the peak start location 114, the peak end location 116, both the peak start location 114 and the peak end location 116, or neither the peak start location 114 nor the peak end location 116 may be defined by a dropline 108 from the chromatogram data set 102 to the baseline 106 associated with the peak 104.

As will be discussed further below with reference to the integration logic 1006, the area "under" a peak 104 (bounded in the direction of the retention time axis by the peak start location 114 and the peak end location 116, and bounded in the direction of the magnitude axis by the baseline 106 and the chromatogram data set 102) may be used to quantify the amount of a particular constituent (e.g., a compound) in the sample mixture under test by a chromatography instrument. In the field of chromatography, there are no canonical or universal definitions of a peak 104, a baseline 106, a peak start location 114, or a peak end location 116. Different individuals and institutions may have their own preferences for how peak locations 112, baselines 106, peak start locations 114, and/or peak end locations are identified in chromatogram data set 102, and these individual or institutional preferences may themselves differ for different types of sample mixtures or different questions of interest. For example, the particular identification of peak locations 112 and baselines 106 illustrated in the graphical representation 100 of FIG. 5 may be considered "correct" by one user of a chromatography instrument and "incorrect" by another user of the chromatography instrument (who may instead wish, for example, to combine the peaks 104-1, 104-2, 104-3, and 104-4 into a group of peaks associated with a single baseline 106, as illustrated in FIG. 6 and as discussed below). Further, there may be no readily identifiable and/or human-understandable metrics or rules that an average user can directly program into a chromatography system to achieve consistent and desired identification of peak and baseline characteristics in chromatogram data. Instead, a user of conventional chromatography systems has typically been limited to receiving chromatogram data annotated with generically defined peaks and baselines, which the user has to then manually adjust to achieve their desired result. If that process is burdensome, a user may alternately choose to forgo any kind of automatic generic definition of peaks and baselines, and may simply define the peaks and baselines manually themselves. Both of these approaches require a tremendous amount of human intervention, slowing the rate at which chromatography analysis can be performed and thereby throttling chromatography throughput.

As noted above, to address and overcome some or all of these issues, the peak/baseline generation logic 1002 may include a machine-learning computational model that outputs estimated peak locations and estimated baselines, and that is trained on data that has been provided by an individual or institution and reflects that individual's or institution's preferences for peak and baseline identification. The machine-learning computational model included in the peak/baseline generation logic 1002 may be trained to recognize the "subjective," difficult-to-quantify preferences that govern an individual's or institution's method of defining peaks and baselines, and may significantly reduce the amount of human intervention required to process and characterize a chromatogram, significantly decreasing errors and significantly increasing throughput.

In some embodiments, the machine-learning computational model may be a neural network computational model that receives, as an input, chromatogram data set 102, and outputs a data structure representative of estimated peak locations 112 and estimated baselines 106 for the chromatogram data set 102. The architecture of the machine-learning computational model may take any of a number of forms, such as a neural network model (e.g., a convolutional neural network model). For example, the peak/baseline generation logic 1002 may include a machine-learning computational model with an architecture similar to that of the U-NET convolutional neural network, but with U-NET's two-dimensional convolutions (suitable for a two-dimensional input image) replaced by one-dimensional convolutions (suitable for a one-dimensional input chromatogram data array). Different kernel sizes (e.g., a kernel size between 3 and 20) and numbers of blocks (e.g., four blocks in the descending portion of the "U" of the U-NET architecture) may be used and/or adjusted as suitable. Training of the machine-learning computational model included in the peak/baseline generation logic 1002 is discussed further below with reference to the training logic 1008.

The data structure output by the machine-learning computational model of the peak/baseline generation logic 1002 may also take any of a number of forms. For example, the output data structure may include a vector associated with each point in the chromatogram data set 102. In some embodiments, the vector may include an indicator of whether the point corresponds to a peak location 112 or not (e.g., a confidence measure, with values closer to "1" indicating higher confidence that the point corresponds to a peak location 112 and values closer to "0" indicating lower confidence that the point corresponds to a peak location 112), a retention time distance indicating the associated baseline start location 118 relative to the peak location 112 (when the point corresponds to a peak location 112), and a retention time distance indicating the associated baseline end location 120 relative to the peak location 112 (when the point corresponds to a peak location 112). For example, a point in the chromatogram data set 102 may be associated with a vector [1, -4, 3] in the output data structure, with the "1" serving as an indicator that the point corresponds to a peak location 112 (with high confidence), the "-4" indicating that the baseline start location 118 occurs four retention time samples prior to the peak location 112, and the "3" indicating that the baseline end location 120 occurs three retention time samples after the peak location 112. A point in the chromatogram data set 102 that does not correspond to a peak location 112 may have a "0" as the first entry in the vector of the associated output data structure.

In some embodiments in which the output data structure includes a vector associated with each point in the chromatogram data set 102, the vector may include an indicator of whether the point corresponds to a peak location 112 or not (e.g., a confidence measure, with values closer to "1" indicating higher confidence that the point corresponds to a peak location 112 and values closer to "0" indicating lower confidence that the point corresponds to a peak location 112), a retention time distance indicating the associated baseline start location 118 relative to the peak location 112 (when the point corresponds to a peak location 112), a value of the baseline start signal 122 (when the point corresponds to a peak location 112), a retention time distance indicating the associated baseline end location 120 relative to the peak location 112 (when the point corresponds to a peak location 112), and a value of the baseline end signal 124 (when the point corresponds to a peak location 112). For example, a point in the chromatogram data set 102 may be associated with a vector [1, -4, 1.2, 3, 2.7] in the output data structure, with the "1" serving as an indicator that the point corresponds to a peak location 112 (with high confidence), the "-4" indicating that the baseline start location 118 occurs four retention time samples prior to the peak location 112, the "1.2" indicating that the baseline start signal 122 has a value of 1.2, the "3" indicating that the baseline end location 120 occurs three retention time samples after the peak location 112, and the "2.7" indicating that the baseline end signal 124 has a value of 2.7.

In some embodiments in which the output data structure includes a vector associated with each point in the chromatogram data set 102, the vector may include a ternary indicator of whether the point corresponds to a peak location 112, a baseline start location 118, or neither; a retention time distance indicating (when the ternary indicator indicates that the point corresponds to a peak location 112) the associated peak start location 114 relative to the peak location 112; and a retention time distance indicating (when the ternary indicator indicates that the point corresponds to a peak location 112) the associated peak end location 116 relative to the peak location 112 or (when the ternary indicator indicates that the point corresponds to a baseline start location 118) the associated baseline end location 120 relative to the baseline start location 118. For example, a point in the chromatogram data set 102 may be associated with a vector [1, -5, 4] in the output data structure, with the "1" indicating that the point corresponds to a peak location 112, the "-5" indicating that the peak start location 114 occurs five retention time samples prior to the peak location 112, and the "4" indicating that the peak end location 116 occurs four retention time samples after the peak location 112. In another example, a point in the chromatogram data set 102 may be associated with a vector [2, 0, 30] in the output data structure, with the "2" indicating that the point corresponds to a baseline start location 118, and the "30" indicating that the baseline end location 120 occurs 30 retention time samples after the baseline start location 118.

In some embodiments in which the output data structure includes a vector associated with each point in the chromatogram data set 102, the vector may include a multi-ary indicator of whether the point corresponds to a peak location 112 that could be one of multiple different types of peaks 104. For example, a vector may include a senary indicator of whether the point corresponds to a peak location 112 that could be one of six different types of peak 104: BM (a peak 104 whose peak start location 114 coincides with a baseline start location 118, and whose peak end location 116 does not coincide with a baseline end location 120), M (a peak 104 whose peak start location 114 does not coincide with a baseline start location 118, and whose peak end location 116 does not coincide with a baseline end location 120), MB (a peak 104 whose peak start location 114 does not coincide with a baseline end location 120, and whose peak end location 116 coincides with a baseline end location 120), BMB (a peak 104 whose peak start location 114 coincides with a baseline start location 118, and whose peak end location 116 coincides with a baseline end location 120), Rd (a rider peak on the downslope of the chromatogram data set 102), or Ru (a rider peak on the upslope of the chromatogram data set 102). In other examples, a vector may include a quaternary indicator of whether the point corresponds to a peak location 112 that could be one of four different types of peaks 104: BM, M, MB, or BMB. In the machine-learning computational model of the peak/baseline generation logic 1002, these peak type indicators may be associated with a softmax loss function during training, while a mean squared error loss function may be used for the other values in the output data structures disclosed herein; training is discussed further below with reference to the training logic 1008. Such peak type indicators may be combined with or included in any of the other output data structures disclosed herein; for example, in some embodiments in which the output data structure includes a vector associated with each point in the chromatogram data set, the vector may include a multi-ary peak type indicator, a retention time distance indicating the associated peak start location 114 (as discussed above), and a retention time distance indicating the associated peak end location 116 (as discussed above). Any of the multi-ary indicators discussed herein (e.g., any binary, ternary, and quaternary indicators) discussed herein may represent a confidence in the identification of a feature; for example, a ternary feature indicator (e.g., one in which a "0" represents one type of the feature, a "1" represents another type of the feature, and a "2" represents another type of the feature) may indicate confidence in the identification by how close the value of the indicator is to the defined values (e.g., how close an indicator is to "0," "1," or "2," may indicate how confident the identification is).

In some embodiments, the machine-learning computational model of the peak/baseline generation logic 1002 may output only estimated baselines, without outputting estimated peak locations. In such embodiments, the peak/baseline generation logic 1002 may identify peak locations 112 using non-machine-learning techniques, such as any conventional peak detection algorithm known in the art. In some embodiments in which the machine-learning computational model outputs only estimated baselines, the output data structure may include a vector associated with each point in the chromatogram data set 102. In some such embodiments, the vector may include an indicator of whether the point corresponds to a baseline start location 118 (e.g., a confidence measure, with values closer to "1" indicating higher confidence that the point corresponds to a baseline start location 118 and values closer to "0" indicating lower confidence that the point corresponds to a baseline start location 118), and a retention time distance indicating the associated baseline end location 120 relative to the baseline start location 118. For example, a point in the chromatogram data set 102 may be associated with a vector [1, 40] in the output data structure, with the "1" serving as an indicator that the point corresponds to a baseline start location 118 (with high confidence), and the "40" indicating that the baseline end location 120 occurs 40 retention time samples after the baseline start location 118.

In some embodiments, the peak/baseline generation logic 1002 may process the chromatogram data set 102 by performing computational operations on the chromatogram data set 102 before it is input to the machine-learning computational model, and/or may perform computational operations on the estimated peak locations 112 and estimated baselines 106 output by the machine-learning computational model in order to generate the "final" peak locations 112 and baselines 106. For example, in some embodiments, the peak/baseline generation logic 1002 may filter the chromatogram data set 102, remove outliers from the chromatogram data set 102, perform signal resampling of the chromatogram data set 102 (e.g., to correspond to 1 data point per second, or another frequency), and/or scale the magnitude of the chromatogram data set 102 (e.g., to cause the magnitudes of the chromatogram data set 102 to vary from a predetermined lower value to a predetermined upper value, such as the interval [0, 1000]) before providing the result to the machine-learning computational model.

In some embodiments, the peak/baseline generation logic 1002 may "prune" the estimated baselines 106 output by the machine-learning computational model by applying an intersection-over-union technique to any sets of estimated baselines 106 in which the estimated baselines 106 are overlapping enough to be considered to represent a same single baseline 106 for a group of multiple peaks 104 (e.g., by computing the ratio of the overlap of multiple estimated baselines 106 to the total coverage of the multiple estimated baselines 106, and comparing that ratio to a threshold). Upon identifying such overlapping estimated baselines 106, the "leftmost" limit of the set of overlapping estimated baselines 106 is set to be the baseline start location 118 of the combined baseline 106, and the "rightmost" limit of the set of overlapping estimated baselines 106 is set to be the baseline end location 120 of the combined baseline 106.

In some embodiments, the peak/baseline generation logic 1002 may "prune" the estimated peak locations 112 output by the machine-learning computational model by identifying estimated peak locations 112 that are "clustered" within a threshold retention time distance of each other, and outputting only a single "final" peak location 112 representative of that cluster. In some embodiments, the estimated peak location 112 that is associated with the highest confidence may be selected as the "final" peak location 112 representative of the cluster.

In embodiments in which the machine-learning computational model does not output estimated peak start locations 114 or estimated peak end locations 116, the peak/baseline generation logic 1002 may generate peak start locations 114 and peak end locations 116 based on the estimated peak locations 112 and the estimated baselines 106 generated by the machine-learning computational model (and pruned or otherwise processed by the peak/baseline generation logic 1002). In some embodiments, the peak/baseline generation logic 1002 may generate the peak start locations 114 and the peak end locations 116 by locating the local minima of the chromatogram data set 102 (e.g., by computing and analyzing the first and second derivatives of the chromatogram data set 102, as known in the art). The peak/baseline generation logic 1002 may then assign peak start locations 114 and peak end locations 116 based on these local minima using a greedy algorithmic approach, as known in the art, while constraining the result such that, in a group of peaks 104, the peak end location 116 of one peak 104 corresponds to the peak start location 114 of the next peak 104 (and vice versa). When rider peaks 104 are identified by the peak/baseline generation logic 1002, a first derivative of the chromatogram data set 102 may not identify local minima, and thus the peak/baseline generation logic 1002 may apply a threshold based on values of the second derivative of the chromatogram data set 102 to generate associated peak start locations 114 and peak end locations 116. The peak/baseline generation logic 1002 may perform any suitable pre-machine-learning computational model or post-machine-learning computational model operations to generate one or more peak locations 112 and/or one or more baselines 106 for a chromatogram data set 102.

The chromatogram display logic 1004 may cause the display (e.g., on a display device, such as any of the display devices discussed herein) of the one or more peak locations 112 and the one or more baselines 106, generated by the peak/baseline generation logic 1002. In some embodiments, the chromatogram display logic 1004 may cause the display of the one or more peak locations 112 and the one or more baselines 106 concurrently with the display of the chromatogram data set 102. For example, the chromatogram display logic 1004 may cause the display of a graphical user interface (GUI), such as the GUI 3000 discussed below with reference to FIG. 7, that includes a graphical representation of the chromatogram data set 102, peak locations 112, and baselines 106 like the graphical representation 100 of FIG. 5.

When a peak start location 114 or a peak end location 116 does not coincide with a baseline start location 118 or a baseline end location 120, respectively, the chromatogram display logic 1004 may cause the display of an associated dropline 108 concurrently with the display of the chromatogram data set 102. For example, the chromatogram display logic 1004 may cause the display of a GUI, such as the GUI 3000 discussed below with reference to FIG. 7, that includes droplines 108 like the dropline 108-1 (indicating the peak end location 116-1 of the peak 104-1, and the peak start location 114-2 of the peak 104-2) of the graphical representation 100 of FIG. 5.

In some embodiments, the chromatogram display logic 1004 may cause the display of a GUI, such as the GUI 3000 discussed below with reference to FIG. 7, that allows a user to "adjust" one or more peak locations 112, one or more droplines 108, and/or one or more baselines 106 generated by the peak/baseline generation logic 1002. In some embodiments, the chromatogram display logic 1004 may receive the user adjustment through a user manipulation of the displayed one or more peak locations 112, the displayed droplines 108 (when present), and/or the displayed one or more baselines 106 in a GUI (such as the GUI 3000). For example, in some embodiments, the chromatogram display logic 1004 may display a graphical representation like that of the graphical representation 100 of FIG. 5 in a GUI that permits the user to select, add, delete, combine, and/or move peak locations 112, droplines 108, and/or baselines 106 into a new arrangement. FIG. 6 depicts an example graphical representation 130 of chromatogram data set 102 along with peaks 104, baselines 106, and droplines 108 after receipt of a user adjustment, through a GUI (e.g., the GUI 3000 of FIG. 7), to the arrangement of peak locations 112, droplines 108, and baselines 106 of the graphical representation 100 of FIG. 5; in particular, the baselines 106-1, 106-2, and 106-3 of the graphical representation 100 of FIG. 5 may be "combined" into a single baseline 106-5 in the graphical representation 130 of FIG. 6 (resulting in a "alternate" group of peaks 104 that includes the peaks 104-1, 104-2, 104-3, and 104-4), and new droplines 108-2 and 108-3 may be created (to delineate the peak start locations 114 and the peak end locations 116 of the peaks 104 in the group). To make the adjustment represented in FIG. 6, a user may select and "drag" the baseline 106-1, the baseline 106-2, and/or the baseline 106-3 of the graphical representation 100 of FIG. 5, or may otherwise indicate the desired arrangement of baselines 106 (e.g., by editing the baseline start locations 118 and/or the baseline end locations 120 in a table or other numerical representation of the baselines 106 in a GUI). Similarly, a user may adjust the peak locations 112 and/or the droplines 108 (e.g., by selecting and "dragging" the peak locations 112 and/or the droplines 108 generated by the peak/baseline generation logic 1002 to their desired locations).

After receipt of such an adjustment, the chromatogram display logic 1004 may be configured to store the peak locations 112, the droplines 108, and the baselines 106 (e.g., in a memory device, such as any of the memory devices discussed herein), as adjusted, as a confirmed set of peak locations 112, droplines 108, and baselines 106. In some embodiments, the chromatogram display logic 1004 may request, through a GUI such as the GUI 3000 of FIG. 7, that the user provide a file name or other identifier for the confirmed set of peak locations 112, droplines 108, and baselines 106; the chromatogram display logic 1004 may also request such a file name or other identifier if no adjustments to the output of the peak/baseline generation logic 1002 are received. In other embodiments, a file name or other identifier may be automatically generated for a set of peak locations 112, droplines 108, and baselines 106 (e.g., based on the day and time, information about the sample mixture, etc.). The confirmed set of peak locations 112, droplines 108, and baselines 106 may be stored in a single file along with the associated chromatogram data set 102, or separately from the associated chromatogram data set 102.

The integration logic 1006 may, for individual peaks 104, be configured to generate an associated integrated value representing an area above the associated baseline 106 and under a portion of the chromatogram data set 102 corresponding to the individual peak 104. As noted above, the area "under" a peak 104 (bounded along the retention time axis by the peak start location 114 and the peak end location 116, and bounded along the magnitude axis by the baseline 106 and the chromatogram data set 102) may quantify the amount of a particular constituent in the sample mixture under test by a chromatography instrument. FIG. 5, for example, depicts a shaded region 110-1 whose area will be calculated by the integration logic 1006 to generate the integrated value associated with the peak 104-1, and also depicts a shaded region 110-2 whose area will be calculated by the integration logic 1006 to generate the integrated value associated with the peak 104-3; other integrated values associated with other peaks 104 are not depicted to avoid cluttering the drawing. The integrated value generated by the integration logic 1006 for a peak 104 may be depicted numerically in the graphical representation 100 in the area above the peak 104 in a GUI (not shown in FIG. 5 to avoid cluttering the drawing), or may be otherwise provided to a user (e.g., when the user "hovers over" the peak 104 and/or in a numerical table in a GUI, such as the GUI 3000 of FIG. 7).

The training logic 1008 may be configured to initially train the machine-learning computational model used by the peak/baseline generation logic 1002 (e.g., on a body of training data including chromatogram data sets 102 and associated peak locations 112, baselines 106, and droplines 108, generated manually or otherwise), and to retrain the machine-learning computational model upon the receipt of additional chromatogram data sets 102 and associated peak locations 112, baselines 106, and droplines 108. Any suitable training technique for machine-learning computational models may be implemented by the training logic 1008, such as a gradient descent process using suitable loss functions. In some embodiments, the training logic 1008 may use one or more confirmed sets of peak locations 112, droplines 108, and baselines 106 (as discussed above with reference to the chromatogram display logic 1004 and FIG. 6), along with the associated chromatogram data set 102, to retrain the machine-learning computational model, may utilize dropout or other regularization methods, and may reserve some of the training data for use in validation and in assessing when to stop the retraining process. The training logic 1008 may perform such retraining on a regular chronological schedule (e.g., every week), after a certain number of confirmed chromatogram data sets (and associated peak locations 112, baselines 106, and droplines 108) are accumulated (e.g., 20), in accordance with any other suitable schedule, or at the command of a user (e.g., received via a GUI, such as the GUI 3000 of FIG. 7). In some embodiments, the training data for retraining of a machine-learning computational model may include a Network Common Data Format (NetCDF) file including the chromatogram data set 102 (e.g., specifying an array of chromatogram signal values, a sampling rate value corresponding to the detection frequency of the chromatography instrument or a resampled frequency, and, optionally, an array of retention time values corresponding to the array of chromatogram signal values) and a plain text file containing information about the peaks 104, baselines 106, and droplines 108 associated with the chromatogram data set 102 (e.g., the plain text file will include, for each peak 104, a peak type, a peak location 112, a peak start location 114, a peak end location 116, a baseline start signal 122, a baseline end signal 124, a peak start signal indicating the magnitude of the chromatogram data set 102 at the peak start location 114, and a peak end signal indicating the magnitude of the chromatogram data set 102 at the peak end location 116). The plain text file may include any of a number of alternate or additional identifiers of the peak locations 112, the peak start locations 114, the peak end locations 116, the baseline start locations 118, the baseline end locations 120, and/or other labels associated with a chromatogram data set 102. The NetCDF file and the plain text file may be processed by the training logic 1008 to generate an array of floating point numbers representing the chromatogram data set 102 (representative of an input during training of the machine-learning computational model) and a data structure representing the peaks 104, baselines 106, and/or droplines 108, (representative of an output during training of the machine-learning computational model) that matches the output data structure of the machine-learning computational model (e.g., in accordance with any of the embodiments discussed above).

The model selection logic 1010 may be configured to provide multiple machine-learning computational models that may be selectively utilized by the peak/baseline generation logic 1002 to generate peak locations 112, baselines 106, and droplines 108 for a chromatogram data set 102. For example, one machine-learning computational model may be trained for analyzing sample mixtures of one type, while another machine-learning computational model may be trained for analyzing sample mixtures of a different type (and thus the different machine-learning computational models may be trained on different training data sets). The chromatogram display logic 1004 may provide to a user, through a GUI (such as the GUI 3000 of FIG. 7), an option to select the machine-learning computational model that they wish to use for a particular sample mixture from a set of stored machine-learning computational models (e.g., identified with different names) made available by the model selection logic 1010, and the selected machine-learning computational model may be used by the peak/baseline generation logic 1002 as part of generating peak locations 112, droplines 108, and baselines 106 for a chromatogram data set 102 of the particular sample mixture. The model selection logic 1010 may also provide to a user, through a GUI (such as the GUI 3000 of FIG. 7), an option to create a new machine-learning computational model; the model selection logic 1010 may prompt a user to enter a name or other identifier for the new machine-learning computational model, and to specify data that can be used to train the new machine-learning computational model (e.g., a set of peak locations 112, baselines 106, and droplines 108, along with associated chromatogram data sets 102). In some embodiments, the model selection logic 1010 may require a threshold amount of training data before training of a new machine-learning computational model may proceed, and once trained, the new machine-learning computational model may be available for selection via the model selection logic 1010 (e.g., for application, by the peak/baseline generation logic 1002, to a chromatogram data set 102).

FIG. 2 is a flow diagram of a method 2000 of automated peak and baseline generation, in accordance with various embodiments. Although the operations of the method 2000 may be illustrated with reference to particular embodiments disclosed herein (e.g., the chromatography instrument support modules 1000 discussed herein with reference to FIG. 1, the GUI 3000 discussed herein with reference to FIG. 7, the computing devices 4000 discussed herein with reference to FIG. 8, and/or the chromatography instrument support system 5000 discussed herein with reference to FIG. 9), the method 2000 may be used in any suitable setting to perform any suitable support operations. Operations are illustrated once each and in a particular order in FIG. 2, but the operations may be reordered and/or repeated as desired and appropriate (e.g., different operations performed may be performed in parallel, as suitable).

At 2002, one or more peak locations and associated baseline(s) may be generated for a chromatogram data set using a machine-learning computational model. For example, the peak/baseline generation logic 1002 of a support module 1000 may perform the operations of 2002 (e.g., in accordance with any of the embodiments disclosed herein).

At 2004, the one or more peak locations (generated at 2002), the associated baseline(s) (generated at 2002), and the chromatogram data set (of 2002) may be displayed. For example, the chromatogram display logic 1004 of a support module 1000 may perform the operations of 2004 (e.g., in accordance with any of the embodiments disclosed herein).

At 2006, an associated integrated value may be generated for individual peaks. For example, the integration logic 1006 of a support module 1000 may perform the operations of 2006 (e.g., in accordance with any of the embodiments disclosed herein).

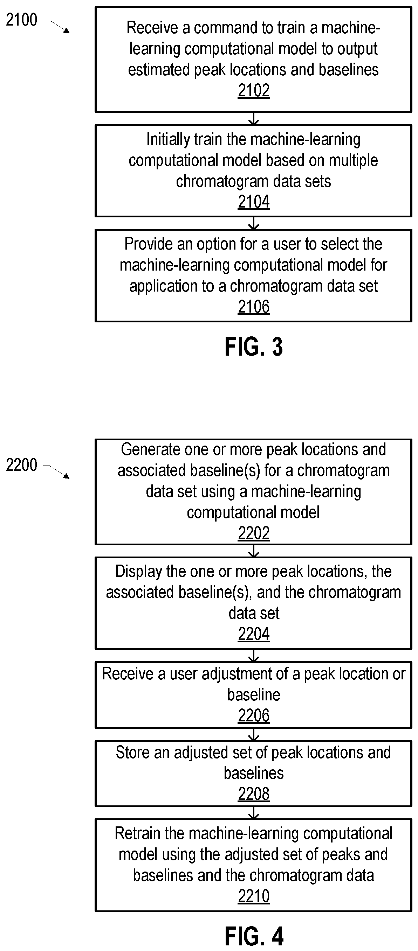

FIG. 3 is a flow diagram of an example method 2100 of generating and selecting a machine-learning computational model for peak and baseline generation, in accordance with various embodiments. Although the operations of the method 2100 may be illustrated with reference to particular embodiments disclosed herein (e.g., the chromatography instrument support modules 1000 discussed herein with reference to FIG. 1, the GUI 3000 discussed herein with reference to FIG. 7, the computing devices 4000 discussed herein with reference to FIG. 8, and/or the chromatography instrument support system 5000 discussed herein with reference to FIG. 9), the method 2100 may be used in any suitable setting to perform any suitable support operations. Operations are illustrated once each and in a particular order in FIG. 3, but the operations may be reordered and/or repeated as desired and appropriate (e.g., different operations performed may be performed in parallel, as suitable).

At 2102, a command to train a machine-learning computational model to output estimated peak locations and baselines may be received. For example, the training logic 1008 of a support module 1000 may perform the operations of 2102 (e.g., in accordance with any of the embodiments disclosed herein).

At 2104, the machine-learning computational model may be initially trained based on multiple chromatogram data sets. For example, the training logic 1008 of a support module 1000 may perform the operations of 2104 (e.g., in accordance with any of the embodiments disclosed herein).

At 2106, an option may be provided for a user to select the machine-learning computational model for application to a chromatogram data set. For example, the chromatogram display logic 1004 of a support module 1000 may perform the operations of 2106 (e.g., in accordance with any of the embodiments disclosed herein).

FIG. 4 is a flow diagram of an example method 2200 of updating a machine-learning computational model for peak and baseline generation based on user adjustments, in accordance with various embodiments. Although the operations of the method 2200 may be illustrated with reference to particular embodiments disclosed herein (e.g., the chromatography instrument support modules 1000 discussed herein with reference to FIG. 1, the GUI 3000 discussed herein with reference to FIG. 7, the computing devices 4000 discussed herein with reference to FIG. 8, and/or the chromatography instrument support system 5000 discussed herein with reference to FIG. 9), the method 2200 may be used in any suitable setting to perform any suitable support operations. Operations are illustrated once each and in a particular order in FIG. 4, but the operations may be reordered and/or repeated as desired and appropriate (e.g., different operations performed may be performed in parallel, as suitable).

At 2202, one or more peak locations and associated baseline(s) may be generated for a chromatogram data set using a machine-learning computational model. For example, the peak/baseline generation logic 1002 of a support module 1000 may perform the operations of 2202 (e.g., in accordance with any of the embodiments disclosed herein).

At 2204, the one or more peak locations (generated at 2202), the associated baseline(s) (generated at 2202), and the chromatogram data set may be displayed. For example, the chromatogram display logic 1004 of a support module 1000 may perform the operations of 2204 (e.g., in accordance with any of the embodiments disclosed herein).

At 2206, a user adjustment of a peak location or a baseline may be received. For example, the chromatogram display logic 1004 of a support module 1000 may perform the operations of 2206 (e.g., in accordance with any of the embodiments disclosed herein).

At 2208, the adjusted set of peaks and baselines (as adjusted at 2206) may be stored. For example, the chromatogram display logic 1004 of a support module 1000 may perform the operations of 2208 (e.g., in accordance with any of the embodiments disclosed herein).

At 2210, the machine-learning computational model may be retrained using the adjusted set of peaks and baselines and the chromatogram data. For example, the training logic 1008 of a support module 1000 may perform the operations of 2210 (e.g., in accordance with any of the embodiments disclosed herein).

The chromatography instrument support methods disclosed herein may include interactions with a human user (e.g., via the user local computing device 5020 discussed herein with reference to FIG. 9). These interactions may include providing information to the user (e.g., information regarding the operation of a chromatography instrument such as the chromatography instrument 5010 of FIG. 9, information regarding a sample being analyzed or other test or measurement performed by a chromatography instrument, information retrieved from a local or remote database, or other information) or providing an option for a user to input commands (e.g., to control the operation of a chromatography instrument such as the chromatography instrument 5010 of FIG. 9, or to control the analysis of data generated by a chromatography instrument), queries (e.g., to a local or remote database), or other information. In some embodiments, these interactions may be performed through a graphical user interface (GUI) that includes a visual display on a display device (e.g., the display device 4010 discussed herein with reference to FIG. 8) that provides outputs to the user and/or prompts the user to provide inputs (e.g., via one or more input devices, such as a keyboard, mouse, trackpad, or touchscreen, included in the other I/O devices 4012 discussed herein with reference to FIG. 8). The chromatography instrument support systems disclosed herein may include any suitable GUIs for interaction with a user.

FIG. 7 depicts an example GUI 3000 that may be used in the performance of some or all of the support methods disclosed herein, in accordance with various embodiments. As noted above, the GUI 3000 may be provided on a display device (e.g., the display device 4010 discussed herein with reference to FIG. 8) of a computing device (e.g., the computing device 4000 discussed herein with reference to FIG. 8) of a chromatography instrument support system (e.g., the chromatography instrument support system 5000 discussed herein with reference to FIG. 9), and a user may interact with the GUI 3000 using any suitable input device (e.g., any of the input devices included in the other I/O devices 4012 discussed herein with reference to FIG. 8) and input technique (e.g., movement of a cursor, motion capture, facial recognition, gesture detection, voice recognition, actuation of buttons, etc.).

The GUI 3000 may include a data display region 3002, a data analysis region 3004, a chromatography instrument control region 3006, and a settings region 3008. The particular number and arrangement of regions depicted in FIG. 7 is simply illustrative, and any number and arrangement of regions, including any desired features, may be included in a GUI 3000.

The data display region 3002 may display data generated by a chromatography instrument (e.g., the chromatography instrument 5010 discussed herein with reference to FIG. 9). For example, the data display region 3002 may display the chromatogram data set 102 (e.g., the chromatogram data set 102 of FIG. 5).

The data analysis region 3004 may display the results of data analysis (e.g., the results of analyzing the data illustrated in the data display region 3002 and/or other data). For example, the data analysis region 3004 may display peak locations 112, droplines 108, and baselines 106 generated by the peak/baseline generation logic 1002. In some embodiments, the data display region 3002 and the data analysis region 3004 may be combined in the GUI 3000 (e.g., to include data output from a chromatography instrument, and some analysis of the data, in a common graph or region). For example, a combined data display region 3002 and data analysis region 3004 may include a graphical representation like those of FIGS. 5 and 6, concurrently displaying chromatogram data set 102, peak locations 112, droplines 108, baselines 106 (and integrated values, not shown, as discussed above with reference to the integration logic 1006).

The chromatography instrument control region 3006 may include options that allow the user to control a chromatography instrument (e.g., the chromatography instrument 5010 discussed herein with reference to FIG. 9). For example, the chromatography instrument control region 3006 may include options to begin a chromatography analysis of a sample mixture, to stop a chromatography analysis of the sample mixture, or to change the conditions of a chromatography analysis of the sample mixture.

The settings region 3008 may include options that allow the user to control the features and functions of the GUI 3000 (and/or other GUIs) and/or perform common computing operations with respect to the data display region 3002 and data analysis region 3004 (e.g., saving data on a storage device, such as the storage device 4004 discussed herein with reference to FIG. 8, sending data to another user, labeling data, etc.). For example, the settings region 3008 may include an option to select a machine-learning computational model (e.g., as discussed herein with reference to the model selection logic 1010), an option to save a set of peak locations 112, droplines 108, and/or baselines 106 as a confirmed set (e.g., as discussed herein with reference to the training logic 1008), and/or an option to create a new machine-learning computational model (e.g., as discussed herein with reference to the model selection logic 1010).

As noted above, the chromatography instrument support module 1000 may be implemented by one or more computing devices. FIG. 8 is a block diagram of a computing device 4000 that may perform some or all of the chromatography instrument support methods disclosed herein, in accordance with various embodiments. In some embodiments, the chromatography instrument support module 1000 may be implemented by a single computing device 4000 or by multiple computing devices 4000. Further, as discussed below, a computing device 4000 (or multiple computing devices 4000) that implements the chromatography instrument support module 1000 may be part of one or more of the chromatography instrument 5010, the user local computing device 5020, the service local computing device 5030, or the remote computing device 5040 of FIG. 9.

The computing device 4000 of FIG. 8 is illustrated as having a number of components, but any one or more of these components may be omitted or duplicated, as suitable for the application and setting. In some embodiments, some or all of the components included in the computing device 4000 may be attached to one or more motherboards and enclosed in a housing (e.g., including plastic, metal, and/or other materials). In some embodiments, some these components may be fabricated onto a single system-on-a-chip (SoC) (e.g., an SoC may include one or more processing devices 4002 and one or more storage devices 4004). Additionally, in various embodiments, the computing device 4000 may not include one or more of the components illustrated in FIG. 8, but may include interface circuitry (not shown) for coupling to the one or more components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface) . For example, the computing device 4000 may not include a display device 4010, but may include display device interface circuitry (e.g., a connector and driver circuitry) to which a display device 4010 may be coupled.

The computing device 4000 may include a processing device 4002 (e.g., one or more processing devices). As used herein, the term "processing device" may refer to any device or portion of a device that processes electronic data from registers and/or memory to transform that electronic data into other electronic data that may be stored in registers and/or memory. The processing device 4002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 4000 may include a storage device 4004 (e.g., one or more storage devices). The storage device 4004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 4004 may include memory that shares a die with a processing device 4002. In such an embodiment, the memory may be used as cache memory and may include embedded dynamic random-access memory (eDRAM) or spin transfer torque magnetic random-access memory (STT-MRAM), for example. In some embodiments, the storage device 4004 may include non-transitory computer readable media having instructions thereon that, when executed by one or more processing devices (e.g., the processing device 4002), cause the computing device 4000 to perform any appropriate ones of or portions of the methods disclosed herein.

The computing device 4000 may include an interface device 4006 (e.g., one or more interface devices 4006). The interface device 4006 may include one or more communication chips, connectors, and/or other hardware and software to govern communications between the computing device 4000 and other computing devices. For example, the interface device 4006 may include circuitry for managing wireless communications for the transfer of data to and from the computing device 4000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. Circuitry included in the interface device 4006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra-mobile broadband (UMB) project (also referred to as "3GPP2"), etc.). In some embodiments, circuitry included in the interface device 4006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 4006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 4006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 4006 may include one or more antennas (e.g., one or more antenna arrays) to receipt and/or transmission of wireless communications.

In some embodiments, the interface device 4006 may include circuitry for managing wired communications, such as electrical, optical, or any other suitable communication protocols. For example, the interface device 4006 may include circuitry to support communications in accordance with Ethernet technologies. In some embodiments, the interface device 4006 may support both wireless and wired communication, and/or may support multiple wired communication protocols and/or multiple wireless communication protocols. For example, a first set of circuitry of the interface device 4006 may be dedicated to shorter-range wireless communications such as Wi-Fi or Bluetooth, and a second set of circuitry of the interface device 4006 may be dedicated to longer-range wireless communications such as global positioning system (GPS), EDGE, GPRS, CDMA, WiMAX, LTE, EV-DO, or others. In some embodiments, a first set of circuitry of the interface device 4006 may be dedicated to wireless communications, and a second set of circuitry of the interface device 4006 may be dedicated to wired communications.

The computing device 4000 may include battery/power circuitry 4008. The battery/power circuitry 4008 may include one or more energy storage devices (e.g., batteries or capacitors) and/or circuitry for coupling components of the computing device 4000 to an energy source separate from the computing device 4000 (e.g., AC line power).

The computing device 4000 may include a display device 4010 (e.g., multiple display devices). The display device 4010 may include any visual indicators, such as a heads-up display, a computer monitor, a projector, a touchscreen display, a liquid crystal display (LCD), a light-emitting diode display, or a flat panel display.

The computing device 4000 may include other input/output (I/O) devices 4012. The other I/O devices 4012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 4000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 4000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra-mobile personal computer, etc.), a desktop computing device, or a server computing device or other networked computing component.

One or more computing devices implementing any of the chromatography instrument support modules or methods disclosed herein may be part of a chromatography instrument support system. FIG. 9 is a block diagram of an example chromatography instrument support system 5000 in which some or all of the chromatography instrument support methods disclosed herein may be performed, in accordance with various embodiments. The chromatography instrument support modules and methods disclosed herein (e.g., the chromatography instrument support module 1000 of FIG. 1 and the method 2000 of FIG. 2) may be implemented by one or more of the chromatography instrument 5010, the user local computing device 5020, the service local computing device 5030, or the remote computing device 5040 of the chromatography instrument support system 5000.

Any of the chromatography instrument 5010, the user local computing device 5020, the service local computing device 5030, or the remote computing device 5040 may include any of the embodiments of the computing device 4000 discussed herein with reference to FIG. 8, and any of the chromatography instrument 5010, the user local computing device 5020, the service local computing device 5030, or the remote computing device 5040 may take the form of any appropriate ones of the embodiments of the computing device 4000 discussed herein with reference to FIG. 8.

The chromatography instrument 5010, the user local computing device 5020, the service local computing device 5030, or the remote computing device 5040 may each include a processing device 5002, a storage device 5004, and an interface device 5006. The processing device 5002 may take any suitable form, including the form of any of the processing devices 4002 discussed herein with reference to FIG. 4, and the processing devices 5002 included in different ones of the chromatography instrument 5010, the user local computing device 5020, the service local computing device 5030, or the remote computing device 5040 may take the same form or different forms. The storage device 5004 may take any suitable form, including the form of any of the storage devices 5004 discussed herein with reference to FIG. 4, and the storage devices 5004 included in different ones of the chromatography instrument 5010, the user local computing device 5020, the service local computing device 5030, or the remote computing device 5040 may take the same form or different forms. The interface device 5006 may take any suitable form, including the form of any of the interface devices 4006 discussed herein with reference to FIG. 4, and the interface devices 5006 included in different ones of the chromatography instrument 5010, the user local computing device 5020, the service local computing device 5030, or the remote computing device 5040 may take the same form or different forms.

The chromatography instrument 5010, the user local computing device 5020, the service local computing device 5030, and the remote computing device 5040 may be in communication with other elements of the chromatography instrument support system 5000 via communication pathways 5008. The communication pathways 5008 may communicatively couple the interface devices 5006 of different ones of the elements of the chromatography instrument support system 5000, as shown, and may be wired or wireless communication pathways (e.g., in accordance with any of the communication techniques discussed herein with reference to the interface devices 4006 of the computing device 4000 of FIG. 8). The particular chromatography instrument support system 5000 depicted in FIG. 9 includes communication pathways between each pair of the chromatography instrument 5010, the user local computing device 5020, the service local computing device 5030, and the remote computing device 5040, but this "fully connected" implementation is simply illustrative, and in various embodiments, various ones of the communication pathways 5008 may be absent. For example, in some embodiments, a service local computing device 5030 may not have a direct communication pathway 5008 between its interface device 5006 and the interface device 5006 of the chromatography instrument 5010, but may instead communicate with the chromatography instrument 5010 via the communication pathway 5008 between the service local computing device 5030 and the user local computing device 5020 and the communication pathway 5008 between the user local computing device 5020 and the chromatography instrument 5010.

The user local computing device 5020 may be a computing device (e.g., in accordance with any of the embodiments of the computing device 4000 discussed herein) that is local to a user of the chromatography instrument 5010. In some embodiments, the user local computing device 5020 may also be local to the chromatography instrument 5010, but this need not be the case; for example, a user local computing device 5020 that is in a user's home or office may be remote from, but in communication with, the chromatography instrument 5010 so that the user may use the user local computing device 5020 to control and/or access data from the chromatography instrument 5010. In some embodiments, the user local computing device 5020 may be a laptop, smartphone, or tablet device. In some embodiments the user local computing device 5020 may be a portable computing device.

The service local computing device 5030 may be a computing device (e.g., in accordance with any of the embodiments of the computing device 4000 discussed herein) that is local to an entity that services the chromatography instrument 5010. For example, the service local computing device 5030 may be local to a manufacturer of the chromatography instrument 5010 or to a third-party service company. In some embodiments, the service local computing device 5030 may communicate with the chromatography instrument 5010, the user local computing device 5020, and/or the remote computing device 5040 (e.g., via a direct communication pathway 5008 or via multiple "indirect" communication pathways 5008, as discussed above) to receive data regarding the operation of the chromatography instrument 5010, the user local computing device 5020, and/or the remote computing device 5040 (e.g., the results of self-tests of the chromatography instrument 5010, calibration coefficients used by the chromatography instrument 5010, the measurements of sensors associated with the chromatography instrument 5010, etc.). In some embodiments, the service local computing device 5030 may communicate with the chromatography instrument 5010, the user local computing device 5020, and/or the remote computing device 5040 (e.g., via a direct communication pathway 5008 or via multiple "indirect" communication pathways 5008, as discussed above) to transmit data to the chromatography instrument 5010, the user local computing device 5020, and/or the remote computing device 5040 (e.g., to update programmed instructions, such as firmware, in the chromatography instrument 5010, to initiate the performance of test or calibration sequences in the chromatography instrument 5010, to update programmed instructions, such as software, in the user local computing device 5020 or the remote computing device 5040, etc.). A user of the chromatography instrument 5010 may utilize the chromatography instrument 5010 or the user local computing device 5020 to communicate with the service local computing device 5030 to report a problem with the chromatography instrument 5010 or the user local computing device 5020, to request a visit from a technician to improve the operation of the chromatography instrument 5010, to order consumables or replacement parts associated with the chromatography instrument 5010, or for other purposes.

The remote computing device 5040 may be a computing device (e.g., in accordance with any of the embodiments of the computing device 4000 discussed herein) that is remote from the chromatography instrument 5010 and/or from the user local computing device 5020. In some embodiments, the remote computing device 5040 may be included in a datacenter or other large-scale server environment. In some embodiments, the remote computing device 5040 may include network-attached storage (e.g., as part of the storage device 5004). The remote computing device 5040 may store data generated by the chromatography instrument 5010, perform analyses of the data generated by the chromatography instrument 5010 (e.g., in accordance with programmed instructions), facilitate communication between the user local computing device 5020 and the chromatography instrument 5010, and/or facilitate communication between the service local computing device 5030 and the chromatography instrument 5010.

In some embodiments, one or more of the elements of the chromatography instrument support system 5000 illustrated in FIG. 9 may not be present. Further, in some embodiments, multiple ones of various ones of the elements of the chromatography instrument support system 5000 of FIG. 9 may be present. For example, a chromatography instrument support system 5000 may include multiple user local computing devices 5020 (e.g., different user local computing devices 5020 associated with different users or in different locations). In another example, a chromatography instrument support system 5000 may include multiple chromatography instruments 5010, all in communication with service local computing device 5030 and/or a remote computing device 5040; in such an embodiment, the service local computing device 5030 may monitor these multiple chromatography instruments 5010, and the service local computing device 5030 may cause updates or other information may be "broadcast" to multiple chromatography instruments 5010 at the same time. Different ones of the chromatography instruments 5010 in a chromatography instrument support system 5000 may be located close to one another (e.g., in the same room) or farther from one another (e.g., on different floors of a building, in different buildings, in different cities, etc.). In some embodiments, a chromatography instrument 5010 may be connected to an Internet-of-Things (IoT) stack that allows for command and control of the chromatography instrument 5010 through a web-based application, a virtual or augmented reality application, a mobile application, and/or a desktop application. Any of these applications may be accessed by a user operating the user local computing device 5020 in communication with the chromatography instrument 5010 by the intervening remote computing device 5040. In some embodiments, a chromatography instrument 5010 may be sold by the manufacturer along with one or more associated user local computing devices 5020 as part of a local chromatography instrument computing unit 5012.

The following paragraphs provide various examples of the embodiments disclosed herein.

Example 1 is a chromatography support apparatus, including: first logic to generate one or more peak locations for a chromatogram data set and to generate one or more baselines for the chromatogram data set, wherein an individual peak has an associated baseline, and wherein the first logic includes a machine-learning computational model that outputs estimated peak locations and estimated baselines; second logic to cause the display of the one or more peak locations and the one or more baselines concurrently with the display of the chromatogram data set; and third logic to, for individual peaks, generate an associated integrated value representing an area above the associated baseline and under a portion of the chromatogram data set corresponding to the individual peak.

Example 2 includes the subject matter of Example 1, and further specifies that the chromatogram data set represents data generated by a chromatography instrument.

Example 3 includes the subject matter of Example 2, and further includes: the chromatography instrument.

Example 4 includes the subject matter of any of Examples 1-3, and further specifies that the chromatogram data set includes capillary electrophoresis data, cation exchange data, hydrophobic interaction data, reversed-phase data, or size-exclusion data.

Example 5 includes the subject matter of any of Examples 1-4, and further specifies that the first logic is to process the chromatogram data set and provide the processed chromatogram data set to the machine-learning computational model.

Example 6 includes the subject matter of Example 5, and further specifies that processing the chromatogram data set includes scaling magnitudes of the chromatogram data set.

Example 7 includes the subject matter of any of Examples 5-6, and further specifies that processing the chromatogram data set includes signal resampling of the chromatogram data set.

Example 8 includes the subject matter of any of Examples 1-7, and further specifies that the machine-learning computational model is a neural network model.

Example 9 includes the subject matter of any of Examples 1-8, and further specifies that an input to the machine-learning computational model is a one-dimensional array of chromatogram data.

Example 10 includes the subject matter of any of Examples 1-9, and further specifies that the first logic is to generate one or more baselines for the chromatogram data set by combining one or more of the estimated baselines that are output by the machine-learning computational model.

Example 11 includes the subject matter of any of Examples 1-10, and further specifies that generating one or more peak locations for the chromatogram data set includes selecting a single estimated peak location from a cluster of estimated peak locations.

Example 12 includes the subject matter of any of Examples 1-11, and further specifies that the third logic is to, for individual peaks, identify an associated peak start location and an associated peak end location.

Example 13 includes the subject matter of Example 12, and further specifies that, for at least one peak, the associated peak start location corresponds to a start of the associated baseline, and the associated peak end location corresponds to an end of the associated baseline.

Example 14 includes the subject matter of any of Examples 12-13, and further specifies that, for at least one peak, the associated peak start location is not at a baseline start location of the associated baseline.

Example 15 includes the subject matter of Example 14, and further specifies that the second logic is to, for the at least one peak, cause the display of the associated peak start location as a dropline concurrently with the display of the chromatogram data set, the one or more peak locations, and the one or more baselines.

Example 16 includes the subject matter of any of Examples 12-15, and further specifies that, for at least one peak, the associated peak end location is not at a baseline end location of the associated baseline.

Example 17 includes the subject matter of Example 16, and further specifies that the second logic is to, for the at least one peak, cause the display of the associated peak end location as a dropline concurrently with the display of the chromatogram data set, the one or more peak locations, and the one or more baselines.

Example 18 includes the subject matter of any of Examples 12-17, and further specifies that the third logic is to, for individual peaks, generate the associated integrated value representing an area above the associated baseline, under the chromatogram data set, and between the associated peak start location and the associated peak end location.

Example 19 includes the subject matter of any of Examples 12-18, and further specifies that the machine-learning computational model outputs estimated peak start locations and estimated peak end locations.

Example 20 includes the subject matter of any of Examples 1-19, and further specifies that at least one baseline is associated with multiple peaks.

Example 21 includes the subject matter of any of Examples 1-20, and further specifies that the second logic is to: receive a user adjustment of a peak location or a baseline; and store the one or more peak locations and one or more baselines, including the user-adjusted peak or baseline, as a confirmed set of peak locations and baselines.

Example 22 includes the subject matter of Example 21, and further specifies that the second logic is to receive the user adjustment through a user manipulation of at least one of the displayed one or more peak locations and one or more baselines in a graphical user interface.

Example 23 includes the subject matter of any of Examples 21-22, and further includes: fourth logic to retrain the machine-learning computational model with the chromatogram data set and the confirmed set of peak locations and baselines.

Example 24 includes the subject matter of Example 23, and further specifies that the fourth logic is to retrain the machine-learning computational model in response to a retraining command from a user.

Example 25 includes the subject matter of any of Examples 23-24, and further specifies that the fourth logic is to retrain the machine-learning computational model in accordance with a retraining schedule.

Example 26 includes the subject matter of any of Examples 1-25, and further includes: fourth logic to initially train the machine-learning computational model based on multiple chromatogram data sets and labeled peak locations and baselines for the multiple chromatogram data sets.

Example 27 includes the subject matter of Example 26, and further specifies that the fourth logic is to initially train the machine-learning computational model in response to a command from a user.

Example 28 includes the subject matter of Example 27, and further specifies that the command from the user includes a name for the machine-learning computational model.

Example 29 includes the subject matter of any of Examples 27-28, and further specifies that the command from the user includes an identification of the multiple chromatogram data sets and the labeled peak locations and baselines for the multiple chromatogram data sets.

Example 30 includes the subject matter of any of Examples 1-29, and further specifies that the machine-learning computational model is a first machine-learning computational model, and the chromatography support apparatus further includes: fourth logic to receive a command from a user to train a second machine-learning computational model, and to initially train the second machine-learning computational model based on multiple chromatogram data sets and labeled peak locations and baselines for the multiple chromatogram data sets.

Example 31 includes the subject matter of Example 30, and further specifies that the command from the user includes an identification of the multiple chromatogram data sets and the labeled peak locations and baselines for the multiple chromatogram data sets.

Example 32 includes the subject matter of any of Examples 30-31, and further specifies that the multiple chromatogram data sets and the labeled peak locations and baselines for the multiple chromatogram data sets used to train the second machine-learning computational model are different from multiple chromatogram data sets and labeled peak locations and baselines for the multiple chromatogram data sets used to train the first machine-learning computational model.

Example 33 includes the subject matter of any of Examples 30-32, and further specifies that the second logic is to request, from a user, a selection of which of multiple computational models, including the first machine-learning computational model and the second machine-learning computational model, to apply to a subsequent chromatogram data set.

Example 34 includes the subject matter of Example 33, and further specifies that the second logic is also to provide to the user, selectable options for non-machine-learning peak and baseline detection computational models to apply to a subsequent chromatogram data set.

Example 35 includes the subject matter of any of Examples 1-34, and further specifies that the second logic is to cause the display of the integrated values concurrently with the display of the one or more peak locations and the one or more baselines.

Example 36 is a chromatography support apparatus, including: first logic to: receive a command from a user to train a machine-learning computational model, wherein the command from the user includes an identification of multiple chromatogram data sets and labeled peak locations and baselines associated with the multiple chromatogram data sets for training the machine-learning computational model, and initially train the machine-learning computational model based on the multiple chromatogram data sets and the associated labeled peak locations and baselines, wherein the machine-learning computational model is to output estimated peak locations and estimated baselines for an input chromatogram data set; and second logic to provide, to the user after initial training, an option to select the machine-learning computational model for application to a subsequent chromatogram data set.

Example 37 includes the subject matter of Example 36, and further specifies that the multiple chromatogram data sets represent data generated by a chromatography instrument.

Example 38 includes the subject matter of Example 37, and further includes: the chromatography instrument.

Example 39 includes the subject matter of any of Examples 36-38, and further specifies that the multiple chromatogram data sets include capillary electrophoresis data, cation exchange data, hydrophobic interaction data, reversed-phase data, or size-exclusion data.

Example 40 includes the subject matter of any of Examples 36-39, and further specifies that the machine-learning computational model is a neural network model.

Example 41 includes the subject matter of any of Examples 36-40, and further specifies that an input to the machine-learning computational model is a one-dimensional array of chromatogram data.

Example 42 includes the subject matter of any of Examples 36-41, and further specifies that at least one baseline is associated with multiple peaks.

Example 43 includes the subject matter of any of Examples 36-42, and further specifies that: the machine-learning computational model is a first machine-learning computational model: the first logic is to receive a command from a user to train a second machine-learning computational model, wherein the command from the user includes an identification of multiple chromatogram data sets and labeled peak locations and baselines associated with the multiple chromatogram data sets for training the second machine-learning computational model.

Example 44 includes the subject matter of Example 43, and further specifies that the multiple chromatogram data sets and the labeled peak locations and baselines used to train the second machine-learning computational model are different from the multiple chromatogram data sets and labeled peak locations and baselines used to train the first machine-learning computational model.

Example 45 includes the subject matter of any of Examples 43-44, and further specifies that the second logic is to request, from a user, a selection of which of multiple computational models, including the first machine-learning computational model and the second machine-learning computational model, to use to analyze a subsequent chromatogram data set.

Example 46 includes the subject matter of any of Examples 43-45, and further specifies that the second logic is also to provide to the user, selectable options for non-machine-learning peak and baseline detection computational models to apply to a subsequent chromatogram data set.

Example 47 includes the subject matter of any of Examples 36-46, and further specifies that the first logic is to retrain the machine-learning computational model with additional chromatogram data and associated labeled peak locations and baselines.

Example 48 includes the subject matter of Example 47, and further specifies that the first logic is to retrain the machine-learning computational model in response to a retraining command from a user.

Example 49 includes the subject matter of any of Examples 47-48, and further specifies that the first logic is to retrain the machine-learning computational model in accordance with a retraining schedule.

Example 50 includes the subject matter of any of Examples 36-49, and further includes: fourth logic to, subsequent to selection of the machine-learning computational model, generate one or more peak locations for a chromatogram data set and to generate one or more baselines for the chromatogram data set, wherein an individual peak has an associated baseline, and wherein the one or more peak locations and the one or more baselines are based on estimated peak locations and estimated baselines from the machine-learning computational model; fifth logic to cause the display of the one or more peak locations and the one or more baselines concurrently with the display of the chromatogram data set; and sixth logic to, for individual peaks, generate an associated integrated value representing an area above the associated baseline and under a portion of the chromatogram data set corresponding to the individual peak.

Example 51 includes the subject matter of Example 50, and further specifies that the fifth logic is to cause the display of the integrated values concurrently with the display of the one or more peak locations and the one or more baselines.

Example 52 includes the subject matter of any of Examples 50-51, and further specifies that the fourth logic is to process the chromatogram data set and provide the processed chromatogram data set to the machine-learning computational model.

Example 53 includes the subject matter of Example 52, and further specifies that processing the chromatogram data set includes scaling magnitudes of the chromatogram data set.

Example 54 includes the subject matter of any of Examples 52-53, and further specifies that processing the chromatogram data set includes signal resampling of the chromatogram data set.

Example 55 includes the subject matter of any of Examples 50-54, and further specifies that the fourth logic is to generate one or more baselines for the chromatogram data set by combining one or more of the estimated baselines that are output by the machine-learning computational model.

Example 56 includes the subject matter of any of Examples 50-55, and further specifies that generating one or more peak locations for the chromatogram data set includes selecting a single estimated peak location from a cluster of estimated peak locations.

Example 57 includes the subject matter of any of Examples 50-56, and further specifies that the fourth logic is to, for individual peaks, identify an associated peak start location and an associated peak end location.

Example 58 includes the subject matter of Example 57, and further specifies that, for at least one peak, the associated peak start location corresponds to a start of the associated baseline, and the associated peak end location corresponds to an end of the associated baseline.

Example 59 includes the subject matter of any of Examples 57-58, and further specifies that, for at least one peak, the associated peak start location is not at a baseline start location of the associated baseline.

Example 60 includes the subject matter of Example 59, and further specifies that the fifth logic is to, for the at least one peak, cause the display of the associated peak start location as a dropline concurrently with the display of the chromatogram data set, the one or more peak locations, and the one or more baselines.

Example 61 includes the subject matter of any of Examples 57-60, and further specifies that, for at least one peak, the associated peak end location is not at a baseline end location of the associated baseline.

Example 62 includes the subject matter of Example 61, and further specifies that the fifth logic is to, for the at least one peak, cause the display of the associated peak end location as a dropline concurrently with the display of the chromatogram data set, the one or more peak locations, and the one or more baselines.

Example 63 includes the subject matter of any of Examples 57-62, and further specifies that the sixth logic is to, for individual peaks, generate the associated integrated value representing an area above the associated baseline, under chromatogram data set, and between the associated peak start location and the associated peak end location.

Example 64 includes the subject matter of any of Examples 57-63, and further specifies that the machine-learning computational model outputs estimated peak start locations and estimated peak end locations.

Example 65 includes the subject matter of any of Examples 50-64, and further specifies that the fifth logic is to: receive a user adjustment of a peak location or a baseline; and store the one or more peak locations and one or more baselines, including the user-adjusted peak or baseline, as a confirmed set of peak locations and baselines.

Example 66 includes the subject matter of Example 65, and further specifies that the fifth logic is to receive the user adjustment through a user manipulation of at least one of the displayed one or more peak locations and one or more baselines in a graphical user interface.

Example 67 includes the subject matter of any of Examples 65-66, and further specifies that the first logic is to retrain the machine-learning computational model with the chromatogram data set and the confirmed set of peak locations and baselines.

Example 68 includes the subject matter of Example 67, and further specifies that the first logic is to retrain the machine-learning computational model in response to a retraining command from a user.

Example 69 includes the subject matter of any of Examples 67-68, and further specifies that the first logic is to retrain the machine-learning computational model in accordance with a retraining schedule.

Example 70 is a chromatography support apparatus, including: first logic to generate one or more peak locations for a chromatogram data set and to generate one or more baselines for the chromatogram data set, wherein an individual peak has an associated baseline, and wherein the one or more peak locations and the one or more baselines are based on estimated peak locations and estimated baselines from a machine-learning computational model; second logic to: cause the display of the one or more peak locations and the one or more baselines concurrently with the display of the chromatogram data set, receive a user adjustment of a peak location or a baseline, and store the one or more peak locations and one or more baselines, including the user-adjusted peak or baseline, as a confirmed set of peak locations and baselines; and third logic to retrain the machine-learning computational model with the chromatogram data set and the confirmed set of peak locations and baselines.

Example 71 includes the subject matter of Example 70, and further specifies that the third logic is to initially train the machine-learning computational model using multiple chromatogram data sets and labeled peak locations and baselines associated with the multiple chromatogram data sets.

Example 72 includes the subject matter of any of Examples 70-71, and further specifies that the one or more chromatogram data sets represent data generated by a chromatography instrument.

Example 73 includes the subject matter of Example 72, and further includes: the chromatography instrument.

Example 74 includes the subject matter of any of Examples 70-73, and further specifies that the one or more chromatogram data sets include capillary electrophoresis data, cation exchange data, hydrophobic interaction data, reversed-phase data, or size-exclusion data.

Example 75 includes the subject matter of any of Examples 70-74, and further specifies that the machine-learning computational model is a neural network model.

Example 76 includes the subject matter of any of Examples 70-75, and further specifies that an input to the machine-learning computational model is a one-dimensional array of chromatogram data.

Example 77 includes the subject matter of any of Examples 70-76, and further specifies that at least one baseline is associated with multiple peaks.

Example 78 includes the subject matter of any of Examples 70-77, and further specifies that: the machine-learning computational model is a first machine-learning computational model; the third logic is to train a second machine-learning computational model upon receipt of a command from the user, wherein the command from the user includes an identification of multiple chromatogram data sets and labeled peak locations and baselines associated with the multiple chromatogram data sets for training the second machine-learning computational model, wherein the multiple chromatogram data sets and the labeled peak locations and baselines for the multiple chromatogram data sets used to train the second machine-learning computational model are different from multiple chromatogram data sets and labeled peak locations and baselines for the multiple chromatogram data sets used to train the first machine-learning computational model.

Example 79 includes the subject matter of Example 78, and further includes: fourth logic to request, from a user, a selection of which of multiple computational models, including the first machine-learning computational model and the second machine-learning computational model, to use to analyze a subsequent chromatogram data set.

Example 80 includes the subject matter of any of Examples 78-79, and further specifies that the fourth logic is also to provide to the user, selectable options for non-machine-learning peak and baseline detection computational models to apply to a subsequent chromatogram data set.

Example 81 includes the subject matter of any of Examples 70-80, and further specifies that the second logic is to retrain the machine-learning computational model in response to a retraining command from a user.

Example 82 includes the subject matter of any of Examples 70-81, and further specifies that the second logic is to retrain the machine-learning computational model in accordance with a retraining schedule.

Example 83 includes the subject matter of any of Examples 70-82, and further includes: fourth logic to, for individual peaks, generate an associated integrated value representing an area above the associated baseline and under a portion of the chromatogram data set corresponding to the individual peak.

Example 84 includes the subject matter of Example 83, and further specifies that the second logic is to cause the display of the integrated values concurrently with the display of the one or more peak locations and the one or more baselines.

Example 85 includes the subject matter of any of Examples 70-84, and further specifies that the first logic is to process the chromatogram data set and provide the processed chromatogram data set to the machine-learning computational model.

Example 86 includes the subject matter of Example 85, and further specifies that processing the chromatogram data set includes scaling magnitudes of the chromatogram data set.

Example 87 includes the subject matter of any of Examples 85-86, and further specifies that processing the chromatogram data set includes signal resampling of the chromatogram data set.

Example 88 includes the subject matter of any of Examples 70-87, and further specifies that the first logic is to generate one or more baselines for the chromatogram data set by combining one or more of the estimated baselines that are output by the machine-learning computational model.

Example 89 includes the subject matter of any of Examples 70-88, and further specifies that generating one or more peak locations for the chromatogram data set includes selecting a single estimated peak location from a cluster of estimated peak locations.

Example 90 includes the subject matter of any of Examples 70-89, and further specifies that the first logic is to, for individual peaks, identify an associated peak start location and an associated peak end location.

Example 91 includes the subject matter of Example 90, and further specifies that, for at least one peak, the associated peak start location corresponds to a start of the associated baseline, and the associated peak end location corresponds to an end of the associated baseline.

Example 92 includes the subject matter of any of Examples 90-91, and further specifies that, for at least one peak, the associated peak start location is not at a baseline start location of the associated baseline.

Example 93 includes the subject matter of Example 92, and further specifies that the second logic is to, for the at least one peak, cause the display of the associated peak start location as a dropline concurrently with the display of the chromatogram data set, the one or more peak locations, and the one or more baselines.

Example 94 includes the subject matter of any of Examples 90-93, and further specifies that, for at least one peak, the associated peak end location is not at a baseline end location of the associated baseline.

Example 95 includes the subject matter of Example 94, and further specifies that the second logic is to, for the at least one peak, cause the display of the associated peak end location as a dropline concurrently with the display of the chromatogram data set, the one or more peak locations, and the one or more baselines.

Example 96 includes the subject matter of any of Examples 90-95, and further includes: fourth logic to, for individual peaks, generate an associated integrated value representing an area above the associated baseline, under the chromatogram data set, and between the associated peak start location and the associated peak end location.

Example 97 includes the subject matter of any of Examples 70-96, and further specifies that the machine-learning computational model outputs estimated peak start locations and estimated peak end locations.

Example 98 includes the subject matter of any of Examples 70-97, and further specifies that the second logic is to receive the user adjustment through a user manipulation of the displayed one or more peak locations and one or more baselines in a graphical user interface.

Example A includes any of the chromatography instrument support modules disclosed herein.

Example B includes any of the methods disclosed herein.

Example C includes any of the graphical user interfaces disclosed herein.

Example D includes any of the chromatography instrument support computing devices and systems disclosed herein.

### The following numbered clauses show further illustrative examples only:

1. A chromatography support apparatus, comprising:
   first logic to generate one or more peak locations for a chromatogram data set and to generate one or more baselines for the chromatogram data set, wherein an individual peak has an associated baseline, and wherein the first logic includes a machine-learning computational model that outputs estimated peak locations and estimated baselines;
   second logic to cause the display of the one or more peak locations and the one or more baselines concurrently with the display of the chromatogram data set; and
   third logic to, for individual peaks, generate an associated integrated value representing an area above the associated baseline and under a portion of the chromatogram data set corresponding to the individual peak.
2. The chromatography support apparatus of clause 1, wherein the first logic is to generate one or more baselines for the chromatogram data set by combining one or more of the estimated baselines that are output by the machine-learning computational model.
3. The chromatography support apparatus of clause 1, wherein generating one or more peak locations for the chromatogram data set includes selecting a single estimated peak location from a cluster of estimated peak locations.
4. The chromatography support apparatus of any of clauses 1-3, wherein the third logic is to, for individual peaks, identify an associated peak start location and an associated peak end location.
5. The chromatography support apparatus of clause 4, wherein, for at least one peak, the associated peak start location is not at a baseline start location of the associated baseline.
6. The chromatography support apparatus of clause 5, wherein the second logic is to, for the at least one peak, cause the display of the associated peak start location as a dropline concurrently with the display of the chromatogram data set, the one or more peak locations, and the one or more baselines.
7. The chromatography support apparatus of clause 4, wherein the third logic is to, for individual peaks, generate the associated integrated value representing an area above the associated baseline, under the chromatogram data set, and between the associated peak start location and the associated peak end location.
8. A chromatography support apparatus, comprising:
   first logic to:
   receive a command from a user to train a machine-learning computational model, wherein the command from the user includes an identification of multiple chromatogram data sets and labeled peak locations and baselines associated with the multiple chromatogram data sets for training the machine-learning computational model, and
   initially train the machine-learning computational model based on the multiple chromatogram data sets and the associated labeled peak locations and baselines, wherein the machine-learning computational model is to output estimated peak locations and estimated baselines for an input chromatogram data set; and
   second logic to provide, to the user after initial training, an option to select the machine-learning computational model for application to a subsequent chromatogram data set.
9. The chromatography support apparatus of clause 8, wherein an input to the machine-learning computational model is a one-dimensional array of chromatogram data.
10. The chromatography support apparatus of clause 8, wherein at least one baseline is associated with multiple peaks.
11. The chromatography support apparatus of any of clauses 8-10, wherein:
   the machine-learning computational model is a first machine-learning computational model:
   the first logic is to receive a command from a user to train a second machine-learning computational model, wherein the command from the user includes an identification of multiple chromatogram data sets and labeled peak locations and baselines associated with the multiple chromatogram data sets for training the second machine-learning computational model.
12. The chromatography support apparatus of clause 11, wherein the multiple chromatogram data sets and the labeled peak locations and baselines used to train the second machine-learning computational model are different from the multiple chromatogram data sets and labeled peak locations and baselines used to train the first machine-learning computational model.
13. The chromatography support apparatus of clause 11, wherein the second logic is to request, from a user, a selection of which of multiple computational models, including the first machine-learning computational model and the second machine-learning computational model, to use to analyze a subsequent chromatogram data set.
14. The chromatography support apparatus of clause 11, wherein the second logic is also to provide to the user, selectable options for non-machine-learning peak and baseline detection computational models to apply to a subsequent chromatogram data set.
15. A chromatography support apparatus, comprising:
   first logic to generate one or more peak locations for a chromatogram data set and to generate one or more baselines for the chromatogram data set, wherein an individual peak has an associated baseline, and wherein the one or more peak locations and the one or more baselines are based on estimated peak locations and estimated baselines from a machine-learning computational model;
   second logic to:
      cause the display of the one or more peak locations and the one or more baselines concurrently with the display of the chromatogram data set,
      receive a user adjustment of a peak location or a baseline, and store the one or more peak locations and one or more baselines, including the user-adjusted peak or baseline, as a confirmed set of peak locations and baselines; and
      third logic to retrain the machine-learning computational model with the chromatogram data set and the confirmed set of peak locations and baselines.

## Claims

1. A chromatography support apparatus, comprising:
first logic to provide multiple machine-learning computational models to a user as options for processing chromatogram data, wherein the multiple machine-learning computational models comprise a first machine-learning computational model and a second machine-learning computational model, and wherein the first machine-learning computational model and the second machine-learning computational model are different;
second logic to train one or more of the multiple machine-learning computational models with training data;
third logic to require a threshold amount of training data to be used in training of the one or more multiple machine-learning computational models before the one or more multiple machine-learning computational models can be used by a user;
fourth logic to provide, to the user, the option to select only the one or more of the multiple machine-learning computational models which satisfy the requirement of the third logic for processing chromatography data;
fifth logic to process the chromatography data with a selected one of the multiple machine-learning computational models.

2. The chromatography support apparatus of claim 1, wherein the second logic is to further retrain the selected one of the multiple machine-learning computational models upon receiving a command from a user to retrain the selected one of the multiple machine-learning computational models.

3. The chromatography support apparatus of claim 2, wherein the command includes a user adjustment of an output of chromatography data processed by the selected one of the multiple machine-learning computational models.

4. The chromatography support apparatus of claim 3, wherein the user adjustment includes a user adjustment of a peak location or a baseline generated by the selected one of the multiple machine-learning computational models through a graphical user interface.

5. The chromatography support apparatus of claim 1, wherein the training data includes multiple chromatogram data sets including labeled peak locations and baselines associated with the multiple chromatogram data sets.

6. The chromatography support apparatus of claim 1, wherein the fourth logic is also to provide to the user selectable options for non-machine-learning computational models.

7. The chromatography support apparatus of claim 1, further comprising third logic to provide a user with the option of creating a new machine-learning computational model.

8. A method for scientific instrument support, comprising:
receiving a command to train a machine-learning computational model to be used to process chromatography data;
train the machine-learning computational model with training data;
determine if the machine-learning computational model surpasses a threshold amount of training data;
provide, to a user, the option to select the machine-learning computational model after the determination that the machine-learning computational model surpasses the threshold amount of training data to process the chromatography data;
process the chromatography data with the machine-learning computational model;
receive a user adjustment of the processed chromatography data;
retrain the machine-learning computational model based on the user adjustment of the processed chromatography data.

9. The method for scientific instrument support of claim 8, wherein the user adjustment is made by way of a graphical user interface and the user adjusts an outputted peak or baseline of the processed chromatography data.

10. The method for scientific instrument support of claim 8, wherein the training data includes multiple chromatogram data sets including labeled peak locations and baselines associated with the multiple chromatogram data sets.

11. The method for scientific instrument support of claim 8, further comprising providing, to the user, selectable options for non-machine-learning computational models to process the chromatography data.

12. The method for scientific instrument support of claim 8, further comprising providing, to a user, the option of creating a new machine-learning computational model.
